# EUROPÄISCHE PATENTSCHRIFT

(11) **EP 1 599 308 B1**
(45) Veröffentlichungstag und Bekanntmachung des Hinweises auf die Patenterteilung: **26.03.2008**
(21) Anmeldenummer: 03770841.9
(22) Anmeldetag: 24.11.2003
(51) Int. Cl.: B23D 29/00, B23D 23/00

(54) **PRESSGERÄT**
PRESS DEVICE
APPAREIL DE PRESSAGE

(30) Priorität: 06.03.2003 CH 344032003
(43) Veröffentlichungstag der Anmeldung: 30.11.2005
(73) Patentinhaber: VON ARX AG Maschinenfabrik, CH-4450 Sissach (CH)
(72) Erfinder: AMHERD, René, CH-8832 Wollerau (CH)
(74) Vertreter: Schneider Feldmann AG Patent- und Markenanwälte
(86) Internationale Anmeldenummer: PCT/CH2003/000774
(87) Internationale Veröffentlichungsnummer: WO 2004/078398

(56) Entgegenhaltungen:
- EP-A- 1 114 698
- DE-A- 1 812 109
- DE-U- 29 703 053
- US-B1- 6 230 542

## Beschreibung

Die vorliegende Erfindung betrifft ein Pressgerät, welches geeignet ist zum Verpressen von Kupplungselementen mit den Merkmalen des Oberbegriffes des Patentanspruches 1.

Solche Pressgeräte haben eine gabelförmige Aufnahme, in der ein auswechselbar gehaltenes Werkzeug mittels eines Verbindungsbolzens gehalten ist. In der gabelförmigen Aufnahme lässt sich ein Werkzeug einsetzen, welches zwei gegeneinander bewegbare Schwenkarme aufweist, die zwischen zwei Trägerplatten je für sich um einen Lagerbolzen relativ zueinander schwenkbar sind. Die Lagerplatten, die meist eine etwa T-förmige Gestalt haben, weisen neben den Bohrungen, in denen die Lagerbolzen eingreifen, je eine dritte Bohrung auf, durch welche der Verbindungsbolzen hindurch greift, wenn das Werkzeug in der gabelförmigen Aufnahme eingesetzt ist. Das Pressgerät weist elektromechanisch oder hydraulisch betätigte Andrückrollen auf, die auf den beiden zueinander hin gerichteten Flanken der beiden Schwenkarme anliegen und somit die beiden Schwenkarme in diesem Bereich auseinander drücken, wobei die Bereiche vor den beiden Lagerbolzen sich aufeinander zu bewegen.

Solche Pressgeräte sind in den letzten Jahren mit grossem Erfolg auf den Markt gebracht worden. Sie dienen vorzugsweise dazu, Kopplungselemente zusammen zu pressen und so zwei Teile miteinander zu verbinden. Bekannte, meist zylindrische Kopplungselemente sind beispielsweise Presshülsen, Pressfittinge oder Rohrmuffen aber auch direkt ineinander geschobene Rohrabschnitte. Entsprechend haben diese Pressgeräte im Hausinstallationsbereich grosse Verbreitung. Insbesondere bei der Erstellung von Heizungsanlagen, sanitären Anlagen und Gasleitungsnetzen sind entsprechend solche Geräte im Einsatz. Die Installateure, die mit diesen Geräten arbeiten, wechseln die darin gehaltenen Werkzeuge jeweils aus, je nach der Bedingung der zu erstellenden Verbindungen und den Dimensionen der zu erstellenden Verbindungen.

Bezüglich der Gestaltung der hier interessierenden Geräte sei beispielsweise auf die beiden Dokumente EP-A-0'712'696 oder EP-A-0'941'813 hingewiesen. Bezüglich den mit solchen Pressgeräten betätigbaren Werkzeugen kann beispielsweise auf die DE-U-29703053 oder auf die EP-A-1'114'698 verwiesen werden. Die entsprechende Patentliteratur sowohl bezüglich der Pressgeräte als auch bezüglich der Werkzeuge ist ausserordentlich gross.

Die Installateure, die mit diesen Geräten arbeiten, müssen jedoch nicht nur Verbindungen erstellen, sondern müssen auch die entsprechenden Leitungen an den Wänden montieren oder in Anlagen an entsprechenden Rahmen der Anlage befestigen. Hierzu werden in den einzelnen Bereichen jeweils weit verbreitete, gleichbleibende Materialien verwendet. So müssen die Installateure für sanitäre Anlagen ein U-förmiges Profil verwenden, an dem die Leitungen horizontal oder vertikal verschieden positioniert anbringbar sind. Des weiteren wird für die Montage auch anderes stabförmiges Material verwendet, wie beispielsweise Metallstäbe oder Gewindestangen. Letztlich müssen aber auch oft kleinere Hilfsmaterialien eingesetzt werden, die mit entsprechenden Langlöchern versehen werden müssen. Dabei ist es bemühend, wenn man für all diese Nebentätigkeiten zusätzliche Maschinen benötigt, die entsprechend über Leitungen gespiesen werden müssen und die die gewünschten Tätigkeiten trotzdem oftmals nur mit wenig Präzision und mit erheblichen Umständen zu leisten vermögen.

Es ist daher die Aufgabe der vorliegenden Erfindung, den im Aussendienst tätigen Installateuren und Monteuren ein Gerät in die Hand zu geben, welches mit entsprechende Werkzeugen ausrüstbar ist, mit denen die verschiedenartigen Aufgaben durchgeführt werden können.

Diese Aufgabe löst ein Pressgerät der eingangs genannten Art mit den Merkmalen des Patentanspruches 1. Hierbei können die Scherenplatten entweder die Gestalt haben in Form von Kulissen eines abzuschneidenden Profils, wie dies als eine bevorzugte Ausgestaltungsform im Anspruch 4 festgehalten ist, oder die beiden Scherenplatten können auch mehrere querende Rundlöcher aufweisen, um so Stangenmaterial mit diversen Durchmessern abzulängen. Letztlich ist es jedoch auch möglich, wie dies im Anspruch 8 dargelegt ist, die beiden Scherenplatten als Matrize und Patrize zu gestalten, so dass dasselbe Pressgerät ebenfalls zu Stanzarbeiten, wie beispielsweise der Gestaltung von Langlöchern- geeignet eingesetzt werden kann.

Weitere vorteilhafte Ausgestaltungsformen gehen aus den weiteren Ansprüchen hervor und deren Bedeutung und Wirkungsweise ist in der nachfolgenden Beschreibung unter Bezug auf die Zeichnung erläutert.

In der anliegenden Zeichnung sind bevorzugte Ausführungsbeispiele an Hand von drei Ausführungsvarianten dargestellt. Es zeigt:
- Figur 1: zeigt die Gesamtansicht eines bekannten Pressgerätes und einer darin einsetzbaren Pressklemmzange;
- Figur 2: zeigt die bekannte Pressklemmzange in der Ansicht von oben für sich allein dargestellt;
- Figur 3: zeigt ein erfindungsgemässes Werkzeug, welches in das bekannte Pressgerät einsetzbar ist im offenen Zustand mit eingesetzten Scherenplatten und
- Figur 4: dasselbe Werkzeug im betätigten Zustand in derselben Ansicht wie in Figur 3;
- Figur 5: zeigt das Werkzeug gemäss den Figuren 3 und 4 in einer Seitenansicht, während die
- Figuren 6 und 7: die beiden Scherenplatten für sich allein zeigen.
- Figur 8: zeigt wiederum ein Werkzeug mit eingesetzten Scherenplatten im offenen und
- Figur 9: im betätigten Zustand, während
- Figur 10: diese Anordnung in der Seitenansicht zeigt. Die
- Figuren 11 und 12: zeigen die beiden gegeneinander laufenden Scherenplatten für sich allein dargestellt.
- Figur 13: zeigt ein offenes Werkzeug mit eingesetzter Stanzeinheit, bestehend aus Matrize und Patrize in der Aufsicht von oben und
- Figur 14: dieselbe Ansicht wie Figur 13 im geschlossenen Zustand, während wiederum die
- Figur 15: eine entsprechende Seitenansicht zeigt.
- Figur 16: stellt die Patrize in der Aufsicht und
- Figur 17: in der Seitenansicht mit Blick auf den Stempel dar.
- Figur 18: zeigt die zur Patrize gemäss Figur 16 passende Matrize in der Aufsicht und schliesslich
- Figur 19: die Matrize in Seitenansicht mit Blick auf die Stempelaufnahme.

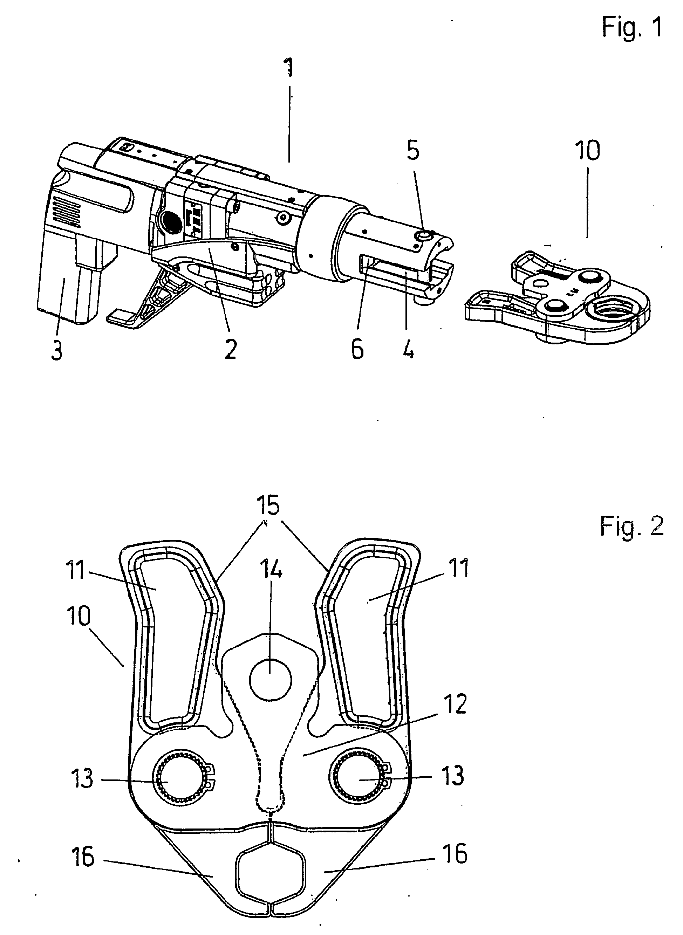

Das mit 1 bezeichnete Pressgerät ist in perspektivischer Darstellung in der Figur 1 gezeigt. Solche Pressgeräte werden meist elektrisch entweder vom Netz oder von einem Akku gespiesen betrieben. Hierzu ist im Antriebsgehäuse 2 ein entsprechender Elektromotor vorhanden, der entweder über eine Spindel mechanisch oder mittels einer Pumpe und einer Kolbenzylindereinheit hydraulisch entsprechende Andrückrollen 6 vorzuschieben und zurückzuziehen vermag. Bei entsprechenden akkubetriebenen Geräten ist oftmals der Akku im Griff 3 untergebracht. An das Antriebsgehäuse 2 schliesst eine Aufnahme 4 an. Diese gabelförmige Aufnahme 4 wird von einem Verbindungsbolzen 5 durchsetzt. Der mit dem Pressgerät arbeitende Installateur oder Monteur setzt hierzu wahlweise in die Aufnahme 4 ein Werkzeug 10 ein, wozu er den gesicherte Verbindungsbolzen entfernt, das Werkzeug 10 einschiebt und darauf den Verbindungsbolzen 5 wieder einsetzt und sichert.

Das in der Figur 2 für sich gezeichnete Werkzeug 10 weist zwei Schwenkarme 11 auf, die mittels je eines Lagerbolzens 13 zwischen zwei zumeist T-förmig gestalteten Trägerplatten 12 schwenkbeweglich gelagert sind. Entsprechend weisen die beiden exakt übereinander positionierten Trägerplatten 12 je ein Verbindungsbolzenloch 14 auf, durch welches der bereits erwähnte Verbindungsbolzen 5 der Aufnahme 4 hindurch geschoben wird. Im eingesetzten Zustand kommen nun die Andrückrollen 6 des Pressgerätes 1 auf die Laufflächen 15 der beiden Schwenkarme 11 zum Anliegen und treiben dabei diese um die beiden Lagerbolzen 13 schwenkend nach aussen, wobei gleichzeitig die vorderen Enden der Schwenkarme 11, die als Klemmarme 16 bezeichnet sind, aufeinander zu bewegt werden. Die in der Figur 2 dargestellte Position entspricht folglich der geschlossenen Position. Ueblicherweise sind die zu verpressenden Fittinge grösser als die Aufnahme der Klemmzangenarme 16, so dass am Anfang der Klemmtätigkeit die beiden Schwenkarme 11 im Bereich, in dem die Andrückrollen 6 tätig werden, näher zueinander liegen als in der Figur 2 dargestellt und somit auseinander gedrückt werden müssen.

Von diesen an sich bekannten Prämissen ausgehend war es daher die Aufgabe der vorliegenden Erfindung, zusätzliche Werkzeuge zur Verfügung zu stellen, die sich mit dem bekannten Pressgerät betätigen lassen und in ihrer Grundkonzeption diesen Werkzeugen entsprechen.

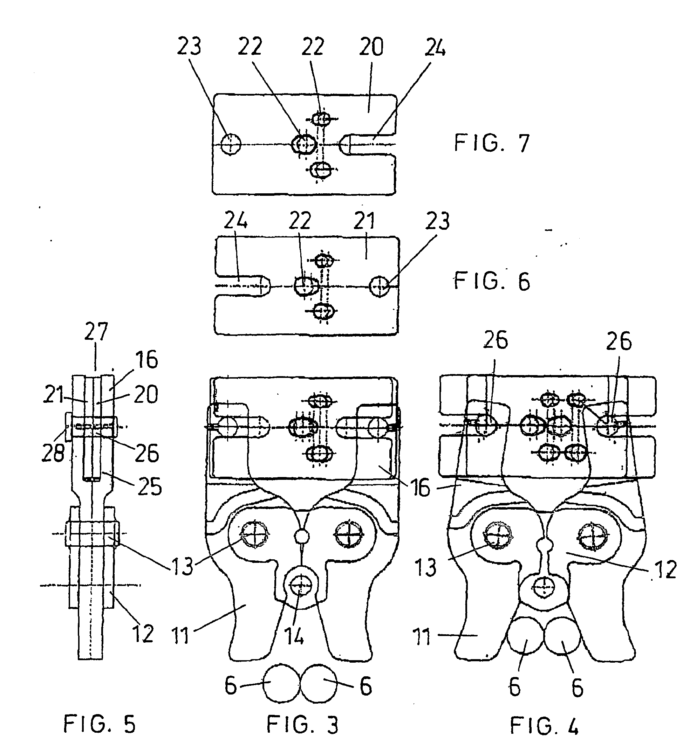

In den Figuren 3-7 ist ein erstes Ausführungsbeispiel eines Werkzeuges dargestellt, welches dazu geeignet ist, Stangenmaterial mit im wesentlichen rundem Querschnitt abzulängen. Das insgesamt mit 10 bezeichnete Werkzeug weist wiederum Schwenkarme 11 auf, die zwischen zwei T-förmigen Trägerplatten 12 um Lagerbolzen 13 schwenkbar gelagert sind. Ueber das Verbindungsbolzenloch 14 ist auch hier das Werkzeug 10 mit der Aufnahme 4 mittels des Verbindungsbolzens 5 verbindbar. Die schematisch dargestellten Andrückrollen 6 sind in der Figur 3 in der Ausgangsposition und in Figur 4 in der betätigten Endposition dargestellt. Zwischen den beiden vorderen Enden der Schwenkarme 11, den sogenannten Klemmarmen 16, sind hier Schneidplatten 20 und 21 gehalten. In jeder Schneidplatte 20 beziehungsweise 21 sind sechs querende Rundlöcher 22 eingeformt. Dabei sind jeweils zwei ähnlich grosse Rundlöcher überlappend eingeformt. Die beiden gegengleichen Schneidplatten 20 und 21 haben jeweils auf der einen Seite ein einem Befestigungsbolzen entsprechendes Mitnehmerloch 23 und auf der anderen Seite demselben Durchmesser entsprechend ein führendes Langloch 24.

Die beiden Schwenkarme 11, die im vorderen Bereich als Klemmarme 16 bezeichnet sind, haben in der hier dargestellten bevorzugten Ausführungsform eine gabelförmige Aufnahme, die durch eine entsprechende zentrische Ausfräsung 27 gebildet ist. Die Breite der Ausfräsung 27 entspricht mindestens der Dicke der beiden aufeinander liegenden Scherenplatten 20 und 21. Die Gabel 25 und die beiden Scherenplatten 20 und 21 durchsetzend ist ein Befestigungsbolzen 26 mit einem entsprechenden Kopf 28 dargestellt. Der Befestigungsbolzen 26 kann als federnder Spreizbolzen gestaltet sein und somit im einen Zinken der Gabel 25 formschlüssig und im anderen kraftschlüssig sich halten. Der Befestigungsbolzen 26 durchgreift in der einen Platte jeweils das Mitnehmerloch 23 und in der gegenläufigen Scherenplatte das führende Langloch 24. Bei der Betätigung des Pressgerätes 1 werden die Andrückrollen 6 vorgeschoben, die Schwenkarme 11 auseinander getrieben und entsprechend die Klemmarme 16 aufeinander zu bewegt, wobei gleichzeitig die Scherenplatten 20 und 21 gegenläufig relativ zueinander aufeinander zu bewegt werden, wobei die querenden Rundlöcher 22 aus ihrer fluchtenden Position in eine Position verschoben werden, in welcher die querenden Rundlöcher vollständig zueinander verschoben sind. Entsprechend werden die anfänglich die fluchtenden querenden Rundlöcher durchsetzenden Stäbe damit sauber durchtrennt. In der hier dargestellten Lösung sind die beiden Scherenplatten 20 und 21 als einfache flache Platten realisiert. Eine minimale Schwenkbewegung bezüglich der Befestigungsbolzen 26 ist dabei im Prinzip möglich. Es ist jedoch durchaus auch möglich, die beiden Scherenplatten 20 und 21 wesentlich dicker zu gestalten und statt in einer gabelförmigen Aufnahme an einer Seite an den beiden Schwenkarmen 11 zu befestigen. Dabei müssen jedoch zur Führung der beiden Schneidplatten diese entsprechend mit Feder und Nut versehen sein, so dass eine gesicherte Parallelführung der beiden Scherenplatten erreicht wird. Bei der hier dargestellten bevorzugten Ausführungsform lassen sich die beiden Scherenplatten dünner und wesentlich preiswerter gestalten, ohne dass zusätzliche Führungsmassnahmen erforderlich sind.

Die beiden führenden Langlöcher 24 brauchen nicht, wie hier dargestellt, zur Seite hin geöffnet zu sein, sondern könnten auch an sich geschlossene Langlöcher sein. Bevorzugterweise wählt man jedoch die offenen Langlöcher, da hiermit die Montage der auswechselbaren Scherenplatten 20 und 21 schneller und einfacher durchführbar ist.

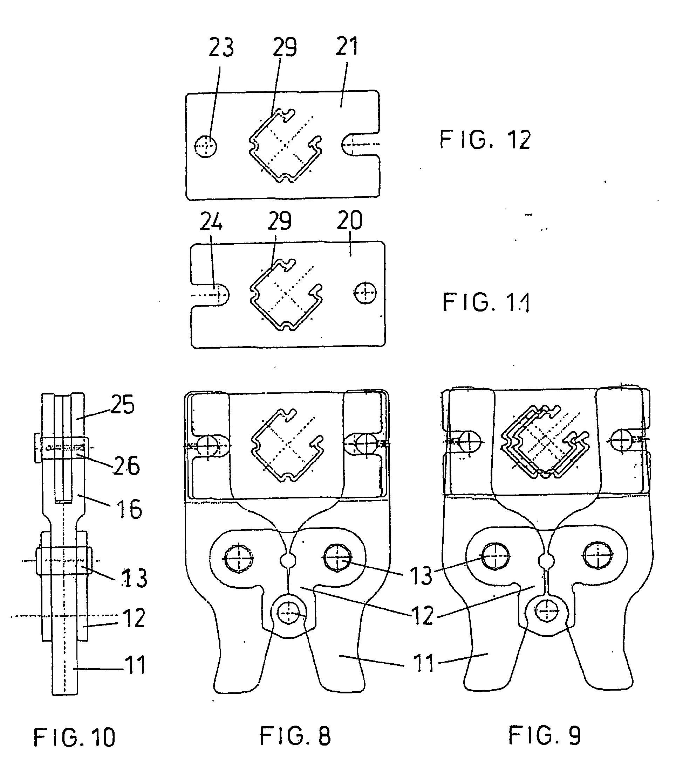

In völlig analoger Weise zeigen die Figuren 8-12 eine Ausführung mittels der ein besonders verbreitetes Profil abgelängt werden kann. In diesen Figuren sind die lediglich zur Erläuterung der Wirkungsweise zuvor dargestellten Andrückrollen 6 weggelassen. Die weiteren Elemente des Werkzeuges sind mit Ausnahme der eigentlichen Scherenplatten 20 und 21 identisch. Wiederum hat das Werkzeug entsprechende Schwenkarme 11, die zwischen zwei T-förmigen Trägerplatten 12 gehalten sind und um Lagerbolzen 13 schwenkbar sind. Auch die Klemmarme 16 sind wiederum als Gabel 25 gestaltet und die Scherenplatten 20 und 21 sind in der Ausfräsung 27 auch hier wiederum mittels eines Befestigungsbolzens 26 gehalten beziehungsweise geführt. Im Gegensatz zu der Ausführung gemäss den Figuren 3-7 sind jedoch die beiden in den Figuren 11 und 12 dargestellten Scherenplatten 20 und 21 mit kulissenförmigen Durchführungen 29 versehen, die in der Gestalt einem bei Sanitärinstallationen äusserst verbreiteten Profilquerschnitt entsprechend gestaltet sind. Die kulissenförmigen Durchführungen 29 sollten dabei so in den beiden Scherenplatten angeordnet sein, dass kein Wandbereich des Querschnittes parallel zur Betätigungsrichtung der beiden Scherenplatten verläuft. Dies ist im hier dargestellten Beispiel auch nicht der Fall. Entsprechend braucht der Hubweg bei der entsprechenden Scherbewegung nur relativ klein zu sein. Auch hier haben die beiden Scherenplatten 20 und 21 entsprechende Mitnehmerlöcher 23 und führende Langlöcher 24. Entsprechend dem geringeren erforderlichen Hub sind auch die führenden Langlöcher 24 kürzer gestaltet als im zuvor gezeigten Beispiel. Wie man aus den beiden hier beschriebenen Beispielen leicht erkennt, braucht man keineswegs für die beiden hier dargestellten Anwendungen unterschiedliche Werkzeuge 10, sondern lediglich unterschiedliche Scherenplatten 20 und 21.

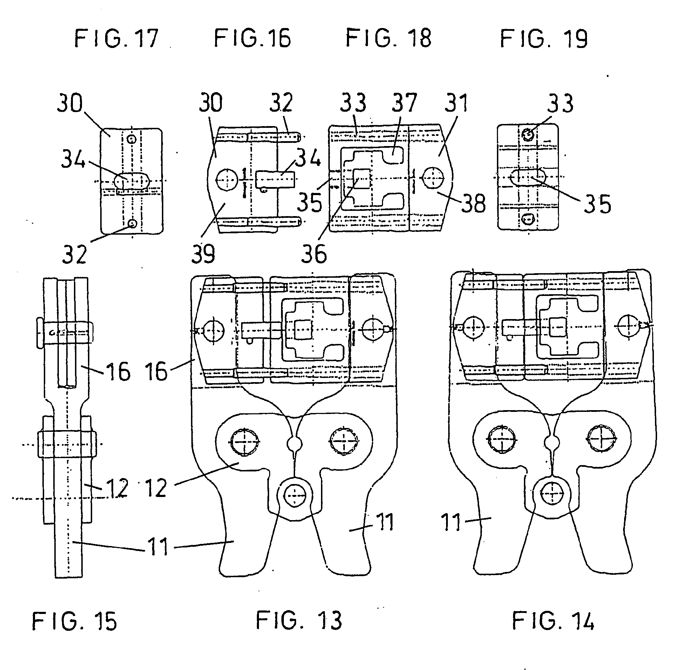

Praktisch in analoger Weise trifft das zuvor Gesagte auch auf die letzte Ausführungsform gemäss den Figuren 13-19 zu. Der Grundaufbau der Werkzeuge 10 ist auch hier wiederum identisch. Diese bestehen wiederum aus den Schwenkarmen 11, die im vorderen Bereich als Klemmarme 16 gestaltet sind und die wiederum zwischen zwei T-förmigen Trägerplatten 12 angeordnet sind. Wiederum sind die Schwenkarme 11 mittels Lagerbolzen 13 in den beiden genannten Trägerplatten 12 gelagert. Die Scherenplatten sind jedoch hier als Patrize 30 und als Matrize 31 gestaltet. Zur Führung von Patrize und Matrize wird man im einen Teil entsprechende Führungsbolzen 32 und im anderen Teil entsprechende Führungsbohrungen 33 vorsehen. Wie aus der Stanztechnik bekannt, weist die Patrize einen Stempel 34 auf und die Matrize eine Stempelaufnahme 35. Hinter der Stempelaufnahme oder Stempelkulisse 35 ist in der Matrize eine Auswurföffnung 36 vorhanden, durch die das ausgestanzte Material seitlich abführbar ist. Im hier dargestellten Beispiel sind Matrize und Patrize so gestaltet, dass sich hiermit Langlöcher ausstanzen lassen. Dabei ist die Matrize so mit einer Aufnahmeöffnung 37 ausgestaltet, dass darin ein Profil einschiebbar ist, welches jenem Profil entspricht, das sich mittels dem Werkzeug, wie in den Figuren 8-12 dargestellt, einführen lässt.

Prinzipiell lassen sich Patrize und Matrize ein- oder zweiteilig ausführen. Symbolisch dargestellt ist hier eine Möglichkeit einer zweiteiligen Patrize und Matrize, wobei prinzipiell ein Matrizenhalter 38 und ein Patrizenhalter 39 vorhanden sind, die entsprechend zur Aufnahme in den beiden Klemmarmen gestaltet sind, und wobei die eigentlichen Matrizen- und Patrizenteile in diesen Halterteilen 38 und 39 befestigbar sind. Die beschriebenen und gezeigten Ausführungsformen zeigen nicht abschliessend, sondern erst ansatzweise die enorme Palette an Möglichkeiten verschieden gestalteter Scherenplatten. Vom Konzept her wird man jedoch immer die Werkzeuge 10 standardisieren, so dass diese immer auf die entsprechenden Pressgeräte 1 passend sind und andererseits wird man vorzugsweise auch die Scherenplatten 20 und 21 bezüglich ihrer Aufnahmen in den Schwenkarmen 11 des Werkzeuges 10 standardisieren. Nur so kann der Anbieter mit relativ geringem Aufwand eine Vielzahl von Anwendungsmöglichkeiten des Gerätes nach den Ansprüchen bieten.

### Liste der Bezugszahlen

- 1: Pressgerät
- 2: Antriebsgehäuse
- 3: Griff
- 4: Aufnahme
- 5: Verbindungsbolzen
- 6: Andrückrollen
- 10: Werkzeug
- 11: Schwenkarme
- 12: T-förmige Trägerplatten
- 13: Lagerbolzen
- 14: Verbindungsbolzenloch
- 15: Laufflächen der Andrückrollen
- 16: Klemmarme
- 20: Scherenplatten
- 21: Scherenplatten
- 22: querende Rundlöcher
- 23: Mitnehmerloch
- 24: führendes Langloch
- 25: Gabel
- 26: Befestigungsbolzen
- 27: Ausfräsung
- 28: Kopf des Befestigungsbolzens
- 29: kulissenförmige Durchführung
- 30: Patrize
- 31: Matrize
- 32: Führungsbolzen
- 33: Führungsbohrungen
- 34: Stempel
- 35: Stempelaufnahme
- 36: Auswurföffnung
- 37: Aufnahmeöffnung

## Patentansprüche

1. Pressgerät (1) zur Verpressung von Kupplungselementen mit einer gabelförmigen Aufnahme (4) und mit einer in dieser Aufnahme mittels eines Verbindungsbolzens (5) auswechselbar gehaltenen Werkzeugs (10), welches zwei gegeneinander bewegbare Schwenkarme (11) aufweist, die zwischen zwei Trägerplatten (12) um Lagerbolzen (13) relativ zueinander schwenkbar sind, wobei die Trägerplatten Bohrungen aufweisen, die vom Verbindungsbolzen (5) in der gabelförmigen Aufnahme (4) durchsetzt sind und wobei bei der Betätigung des Pressgerätes (1) Andrückrollen (6) an den Schwenkarmen (11) anliegen und diese um die Lagerbolzen (13) schwenken, **dadurch gekennzeichnet,**
**dass** das Werkzeug (10) zwei je an einem Schwenkarm (11) befestigte Scherenplatten (20,21) aufweist, wobei jede Scherenplatte je in einem Schwenkarm gehalten und im anderen Schwenkarm geführt ist.

2. Pressgerät nach Anspruch 1, **dadurch gekennzeichnet, dass** die beiden Schwenkarme (11) in den vom Pressgerät entfernteren Bereich als Klemmarme (16) ausgestaltet sind, die zur Aufnahme der Scherenplatten (20,21) ausgebildet sind.

3. Pressgerät nach Anspruch 2, **dadurch gekennzeichnet, dass** die Klemmarme (16) gabelförmig ausgebildet sind und in jeder Gabel (25) eine Scherenplatte (20,21) lagert, die je von einem Befestigungsbolzen (26) durchsetzt ist, der die Gabel (25) des jeweiligen Klemmarmes(16) durchsetzt.

4. Pressgerät nach Anspruch 1, **dadurch gekennzeichnet, dass** die beiden Scherenplatten (20,21) je eine identische kulissenförmige Durchführung (29) entsprechend- der Form eines abzuschneidenden Profils haben.

5. Pressgerät nach Anspruch 3, **dadurch gekennzeichnet, dass** jeweils jede Scherenplatte (20,21) ein dem Bolzenquerschnitt entsprechendes Mitnehmerloch (23) und auf der gegenüber liegenden Seite ein dem Bolzenquerschnitt entsprechendes, führendes Langloch(24) hat, so dass jeder Bolzen (26) in den beiden Klemmarmen (16) je ein Mitnehmerloch(23) der einen und ein führendes Langloch (24) der anderen Scherenplatte quert.

6. Pressgerät nach Anspruch 5, **dadurch gekennzeichnet, dass** die jeweils führenden Langlöcher (24) zum jeweiligen Klemmarm (16) hin offen gestaltet sind.

7. Pressgerät nach Anspruch 1, **dadurch gekennzeichnet, dass** die Scherenplatten(20,21) mit mehreren querenden Rundlöchern (22) zur Ablängung von Stangenmaterial diverser Durchmesser gestaltet sind.

8. Pressgerät nach Anspruch 1, **dadurch gekennzeichnet, dass** die eine Scherenplatte als Matrize (31) und die andere Scherenplatte als Patrize (30) ausgestaltet ist.

9. Pressgerät nach Anspruch 8, **dadurch gekennzeichnet, dass** Matrize (31) und Patrize (30) zweiteilig gestaltet sind, wobei die einen Teile Matrizenhalter und Patrizenhalter sind, die der Befestigung an den Schwenkarmen (11) dienen und je mit aufeinander zu gerichteten Führungsmitteln (32,33) versehen sind, während die anderen Teile die der durchzuführenden Stanzung entsprechenden eigentlichen Matrizen und Patrizen sind.

## Claims

1. A pressing tool (1) for pressing coupling elements, with a fork-like receiver (4) and with a tool (10) which is exchangeably held in this receiver by way of a connection bolt (5) and which comprises two pivot arms (11) movable towards one another and pivotable between two carrier plates (12) about bearing bolts (13), wherein the carrier plates comprise bores through which the connection bolt (5) in the fork-like receiver (4) passes, and wherein on actuation of the pressing apparatus (1) these pressing rollers (6) bear on the pivot arms (11) and pivot these about the bearing bolts (13), **characterized in that**
the tool (10) comprises two shear plates (20, 21) which in each case are fastened on a pivot arm (1), wherein each shear plate in each case is held in one pivot arm and guided in the other pivot arm.

2. A pressing apparatus according to claim 1, **characterized in that** the two pivot arms (11) are designed as clamping arms (16) in the region distanced further from the pressing apparatus and are designed to accommodate the shear plates (20, 21).

3. A pressing apparatus according to claim 2, **characterized in that** the clamping arms (16) are designed in a fork-like manner, and a shear plate (20, 21) is mounted in each fork (25) and in each case this plate is passed though by a fastening bolt (26) which passes through the fork (25) of the respective clamping arm (16).

4. A pressing apparatus according to claim 1, **characterized in that** the two shear plates (20, 21) in each case have an identical guide-like opening (29) corresponding to the shape of a profile to be cut off.

5. A pressing apparatus according to claim 3, **characterized in that** in each case each shear plate (20, 21) has a carrier hole (23) corresponding to the bolt cross section, and on the opposite side, a guiding elongate hole (24) corresponding to the bolt cross section, so that each bolt (26) in the two clamping arms (16) in each case traverses a carrier hole (23) of the one shear plate and a guiding elongate hole (24) of the other shear plate.

6. A pressing apparatus according to claim 5, **characterized in that** the respective guiding elongate holes (24) are designed open towards the respective clamping arm (16).

7. A pressing apparatus according to claim 1, **characterized in that** the shear plates (20, 21) are designed with several traversing round holes (22) for cutting to length rod material of varying diameter.

8. A pressing apparatus according to claim 1, **characterized in that** the one shear plate is designed as a female die (31) and the other shear plate as a male die (30).

9. A pressing apparatus according to claim 8, **characterized in that** the female die (31) and the male die (30) are designed in two parts, wherein the one parts are a female die holder and a male die holder which serve for fastening to the pivot arms (11) and in each case are provided with guide means (32, 33) directed to one another, whilst the other parts are the actual female and male die corresponding to the punching to be carried out.

## Revendications

1. Appareil de pressage (1) pour le pressage d'éléments d'accouplement comprenant un logement (4) en forme de fourche et un outil (10) maintenu de façon amovible dans ce logement au moyen d'un boulon de liaison (5), lequel outil présente deux bras pivotant (11) mobiles l'un par rapport à l'autre, lesquels peuvent basculer entre deux plaques de support (12) autour de boulons d'appui (13) l'un par rapport à l'autre, les plaques de support présentant des perçages qui sont traversés par le boulon de liaison (5) dans le logement (4) en forme de fourche et des galets d'appui (6) s'appliquant sur les bras pivotants (11) lors de l'actionnement de l'outil de pressage (1) et ces rouleaux basculant autour des boulons d'appui (13), **caractérisé en ce que**
l'outil (10) présente deux plaques à ciseaux (20, 21) fixées chacune sur un bras pivotant (11), chaque plaque à ciseaux étant maintenue dans un bras pivotant et guidée dans l'autre bras pivotant.

2. Appareil de pressage selon la revendication 1, **caractérisé en ce que** les deux bras pivotants (11) sont conçus dans la zone plus éloignée de l'outil de pressage que les bras de serrage (16), lesquels sont conçus pour le logement des plaques à ciseaux (20, 21).

3. Appareil de perçage selon la revendication 2, **caractérisé en ce que** les bras de serrage (16) sont conçus en forme de fourche et une plaque à ciseaux (20, 21) est montée dans chaque fourche (25), laquelle plaque est traversée par un boulon de fixation (26), lequel traverse la fourche (25) du bras de serrage (16) respectif.

4. Outil de pressage selon la revendication 1, **caractérisé en ce que** les deux plaques à ciseaux (20, 21) ont un passage (29) identique en forme de coulisse en fonction de la forme d'un profilé à découper.

5. Appareil de pressage selon la revendication 3, **caractérisé en ce qu'**à chaque fois chaque plaque à ciseaux (20, 21) a un trou entraîneur (23) correspondant à la section du boulon et sur le côté opposé un trou oblong (24) de guidage correspondant à la section du boulon, de sorte que chaque boulon (26) traverse dans chacun des deux bras de serrage (16) un trou entraîneur (23) d'une des deux plaques à ciseaux et un trou oblong (24) de guidage de l'autre plaque à ciseaux.

6. Appareil de pressage selon la revendication 5, **caractérisé en ce que** les trous oblongs (24) respectifs de guidage sont conçus ouverts en direction du bras de serrage (16) respectif.

7. Appareil de pressage selon la revendication 1, **caractérisé en ce que** les plaques à ciseaux (20, 21) sont conçues avec plusieurs trous ronds (22) de traversée pour la mise à la longueur de matériau de tige de divers diamètres.

8. Appareil de pressage selon la revendication 1, **caractérisé en ce qu'**une plaque à ciseaux est conçue comme matrice (31) et l'autre plaque à ciseaux comme patrice (30).

9. Appareil de pressage selon la revendication 8, **caractérisé en ce que** la matrice (31) et la patrice (30) sont conçues en deux parties, certaines parties étant des porte-matrice et des porte-patrice qui servent à la fixation sur les bras pivotants (11) et sont dotés chacun de moyens de guidage (32, 33) orientés les uns vers les autres, alors que les autres, parties sont les matrices et patrices proprement dites correspondant au découpage à effectuer.
